Europäisches Patentamt

European Patent Office

Office européen des brevets

(19)

(11) **EP 0 699 003 A1**

## (12) EUROPEAN PATENT APPLICATION
published in accordance with Art. 158(3) EPC

(43) Date of publication:
28.02.1996 Bulletin 1996/09

(21) Application number: 95908375.9

(22) Date of filing: 14.02.1995

(51) Int. Cl.$^6$: **H04N 7/30**

(86) International application number: **PCT/JP95/00202**

(87) International publication number: **WO 95/22228**
(17.08.1995 Gazette 1995/35)

(84) Designated Contracting States:
**DE FR GB**

(30) Priority: **15.02.1994 JP 40404/94**

(71) Applicant: **SONY CORPORATION**
**Tokyo 141 (JP)**

(72) Inventors:
• **TONG, Tak, Yen,**
**Sony Corporation**
**Tokyo 141 (JP)**
• **TAHARA, Katsumi,**
**Sony Corporation**
**Tokyo 141 (JP)**

(74) Representative: **Cotter, Ivan John et al**
**London EC4A 1DA (GB)**

(54) **METHOD AND DEVICE FOR ENCODING IMAGE SIGNAL**

(57) A method of encoding image signals, by which the quality of moving images is improved at a low bit rate. For every picture element, the dynamic range of the image signal is compressed and subjected to orthogonal transformation. Coefficient data obtained by orthogonal transformation are quantized with a first quantization scale. Of the first quantized data quantized, those which are not zero are quantized with a second quantization scale which is smaller than the first quantization scale. As a result, the quality of moving images can be improved further.

FIG. 2

EP 0 699 003 A1

## Description

Technical Field

This invention relates to an image signal encoding method and an image signal encoding apparatus used in various application fields such as digital storage media, television broadcasting, communication networks, and more particularly, this invention is applicable to an image signal encoding method and apparatus thereof for processing digitized motion picture sequence for transmission or storage in a compressed form.

Background Art

In recent years, increasing efforts have been directed toward providing digital speech, digital images, and video sequence for a better signal quality, storage, transmission, and editing. One of the most common application is the digital compact disc for storing speech data and music data. Current efforts have directed toward digital image signal. The digital image signal involves a large amount of data, so that data compression is necessary to reduce the amount of data to be transmitted in data transmitting.

One of such efforts is developed jointly by the International Organization of Standardization (ISO) and the International Electrotechnical Commission (IEC) which is widely known as Moving Picture Expert Group (MPEG). One of the commonly method used by the moving picture expert group in the coding of motion image signal is the discrete cosine transform (DCT). According to the transformation system, the picture is divided into smaller blocks of 8 x 8 pixels and the data of pixel in each block is transformed to frequency domain. Such discrete cosine transform can make a volume of information small.

The moving picture expert group employs a quantization method for quantizing the DCT coefficients in the transformed blocks so as to represent by a set of symbols with a manageable size. In such quantization method, the DCT coefficient is divided by a constant "q" (hereinafter, referred to as "quantization scale"). With this method, each DCT coefficient is approximated to the nearest integer to the DCT coefficient (hereinafter, referred to as "quantized DCT coefficient"). By doing the inverse operation by multiplying the quantized DCT coefficient by the quantization scale "q", It is possible to restore the DCT coefficient to that before coding.

However, if a large quantization scale "q" is set in order to raise a coding efficiency in quantization, an approximation of the DCT coefficient becomes poor, as well as some visible noise appears in the decoded picture. Such noise is commonly known as mosquito noise. In general, most of the energy is concentrated in the low frequency coefficients. Also, high frequency coefficients are less sensitive to human perception comparing to low frequency coefficients.

Hence, when image signal is quantized, more emphasis is put on the low frequency coefficients by assigning smaller quantization scale "q" to it. However, if small quantization scales "q" are used, more bits are needed to code the quantized DCT coefficients.

Also, in case that the picture to transform is a motion picture, a typical characteristic of image signal is that there are a few changes between consecutive frames except for some motion of objects in the screen. A technique, commonly referred to as motion compensation, is used. According to the motion compensation technique, the current picture with blocks is represented by displacement vector taken from the previously coded pictures.

The motion compensation scheme further reduces the number of bits needed to code the motion picture. However, the displacement of the blocks, in some cases, may result in some visible sharp edges between displaced blocks. This is generally called as block noise.

The moving picture expert group has employed such two mentioned schemes (discrete cosine transform and motion compensation) to respective schemes of MPEG1 and MPEG2 of the motion picture sequence coding standard.

In practice, coding using motion compensation, coding using DCT/quantization, or coding using combination of both motion compensation and DCT/quantization are adaptively decided to each block.

Further, MPEG1 and MPEG2 have a rate control mechanism controlling the distribution of the number of bits for each block in the motion picture.

In the rate control mechanism, the size of the quantization scale used in quantizer is set for each macro block corresponding to four DCT blocks, that is 16 x 16 pixels. The quantized DCT coefficients produced by the quantizer can be represented as the data composed of series of zero value followed by a non-zero value. Runlength coding can achieve significant data compression with redundant inputs characterized by long clusters of like symbols, so that the runlength coding is used in the MPEG1 and MPEG2 as the coding of the quantized DCT coefficients. A lower quantization scale will result in a shorter runs of zeros and more bits to encode the quantized DCT coefficients. In addition, since the DCT coefficients having comparatively low energy do not give much effect to the picture quality, it is desirable to represent the quantized DCT coefficients by zero so as to heighten the coding efficiency. However, since the DCT coefficients having comparatively high energy gives much effect to the picture quality, it is desirable to improve non-zero coefficients corresponding to the DCT coefficients having comparatively high energy without shortening the length of the runs of zeros of the quantized DCT coefficients.

Disclosure of Invention

In view of the foregoing, an object of the present invention is to provide an image signal encoding method and apparatus thereof capable of improving considerably the picture quality of video sequence comparing with the conventional ones.

The foregoing object and other objects of the invention have been achieved by the provision of an image signal encoding method for encoding the image signal, comprising the steps of: compressing dynamic ranges of image signal for each pixel; performing orthogonal transform on the image signal having compressed dynamic ranges for each unit block in order to transform the image signal to coefficient data; and quantizing the coefficient data to produce a quantized data.

Further, according to this invention, the image signal encoding method for encoding the image signal comprises the steps of: performing orthogonal transform on the image signal for each unit block in order to transform the image signal to coefficient data; quantizing the coefficient data based on a first quantization scale to produce a first quantized data; and quantizing the coefficient data, concerning only a coefficient data which has the first quantized data being non-zero, based on a second quantization scale which is smaller than the first quantization scale, to produce a second quantized data.

Further, according to this invention, in an image signal decoding method for decoding the quantized data which is produced by compressing the dynamic ranges of image signal for each pixel, by performing the orthogonal transform on the image signal having the compressed dynamic ranges for each unit block to transform the image signal to the coefficient data, and by quantizing the coefficient data, comprises the steps of: inverse-quantizing the quantized to produce the coefficient data; inverse-orthogonal-transforming the coefficient data for each unit block to produce the decoded picture, and extending the dynamic ranges of the decoded image signal for each pixel.

Further, according to this invention, the image signal encoding apparatus for encoding an image signal, comprising: dynamic range compressing means for compressing dynamic ranges of image signal for each pixel; orthogonal transforming means for orthogonal-transforming the image signal having compressed dynamic ranges for each block in order to transform it into coefficient data; and quantization means for quantizing the coefficient data to produce a quantized data.

Further, according to this invention, the image signal encoding apparatus for encoding image signal comprises: means for performing the orthogonal transform on image signal for each unit block to transform the image signal to coefficient data; first quantization means for quantizing the coefficient data based on a first quantization scale to produce a first quantized data; and second quantization means for quantizing the coefficient data, concerning only a coefficient data which has the first quantized data being non-zero practically, based on a second quantization scale which is smaller than the first quantization scale, to produce a second quantized data.

Further, according to this invention, an image signal decoding apparatus for decoding the quantized data which is produced by compressing the dynamic ranges of image signal for each pixel, by performing the orthogonal transform on the image signal having the compressed dynamic ranges for each unit block to transform the image signal to the coefficient data, and by quantizing the coefficient data, comprises: inverse quantization means for producing the coefficient data; inverse orthogonal transform means for inverse-orthogonal-transforming the coefficient data for each unit block to produce the decoded picture; and dynamic range extending means for extending the dynamic ranges of the decoded image signal.

Further, according to this invention, in a picture recording medium in which the encoded picture data is recorded, the step for producing the encoded picture data comprises the steps of: compressing the dynamic ranges of image signal for each pixel; orthogonal-transforming the image signal having the compressed dynamic ranges for each unit block to transform the image signal to coefficient data; and quantizing the coefficient data to produce the quantized data.

Furthermore, according to this invention, in the picture recording medium in which the encoded picture data is recorded, the step for producing the encoded picture data comprises the steps of: orthogonal-transforming the image signal for each unit block to transform the image signal to coefficient data; quantizing the coefficient data based on a first quantization scale to produce a first quantized data; and quantizing the coefficient data, concerning only the coefficient data which has the first quantized data being non-zero practically, based on the second quantization scale which is smaller than the first quantization scale, to produce the second quantized data.

The dynamic ranges of the image signal {A} is compressed for each pixel to orthogonal transform (for example, discrete cosine transform), so that the number of bits necessary to encode a picture can be further reduced. Moreover, only the coefficient data {Z}, which has the first quantized data being non-zero, among the coefficient data obtained by orthogonal transform is quantized based on the second quantization scale $q-1$, $q2$, ... $q-c$, ... which are smaller than the first quantization scale $q$, so as to minimize the quantization difference. Therefore, the picture quality can be further improved comparing to the conventional ones.

Brief Description of Drawings

Fig. 1 is a block diagram showing the whole structure of an encoding and decoding system using a dynamic range compression/extension system;
Fig. 2 is a block diagram showing an embodiment of the quantizer using a multi-step quantization refinement scheme;

Fig. 3 is a block diagram showing other embodiment of the quantizer using a multi-step quantization refinement scheme;

Fig. 4 is a flow chart illustrating a quantization process according to the multi-step quantization refinement scheme of Fig. 3;

Fig. 5 is a block diagram showing an embodiment of the quantizer using a single-step quantization refinement scheme;

Fig. 6 is a flow chart illustrating a quantization process according to the single-step quantization refinement scheme; and

Fig. 7 is a block diagram showing the structure of a decoding circuit.

Best Mode for Carrying Out the Invention

An embodiment of the present invention will be described in detail, with the accompanying drawings.

(1) Principle of picture quality improvement

A picture quality of encoding motion picture sequence can be improved by decreasing the difficulty of the source picture sequence and refining a quantization level used in encoders.

The difficulty of motion picture sequence is defined as a minimum of data necessary to express the motion picture sequence in coding using the parameters of fixed sets in an encoder or the length of coding sequence. In this case, the motion picture sequence of relatively high difficulty is expressed by means of coding sequence longer than that of relatively low difficulty.

In general, the sequence having high difficulty is structured by much sharp edges and image cuts. Seeing such sharp edges and image cuts through pixel level, it is understood that the sharp edges and image cuts are large difference between neighboring pixels in the identical frame or between corresponding pixels between adjacent frames.

Such difficulty of sequence can be decreased by reducing the dynamic ranges at the pixel level of the image sequence. According to the embodiment, linear maps are used in order to easily realize the difficulty reduction. Using linear maps enables to lower the difference of pixel level between neighboring pixels and to make the sharp edges smooth. While, such coded pictures can be restored by reverse mapping. Although the dynamic ranges at a pixel level are restored in a condition that a texture of the picture is a little damaged, such damage is not able to be detected by human sense. Accordingly, the compression of picture information through linear mappings is effective.

As described above, when the difficulty of motion picture sequence is reduced or coding sequence shortens, the part of the difficulty reduced or shorten can be assigned to or used to discrete cosine transform (DCT) coefficient refinement. It is noted that such refinement of DCT coefficient can be achieved by, for example, reducing the quantization scale for each macro block and increasing little by little coding bit in order to make non-zero quantized coefficient refine. However, the coding bit increases comparing to the step when the difficulty of source sequence is reduced owing to the reduction of dynamic ranges.

At any rate, when the more precise quantized coefficient is used to code DCT coefficients, it is possible to obtain the picture of higher quality.

The embodiment proposes an encoding system using two systems. The one called in this application as a multi-step quantization refinement scheme is introduced and a method for improving a precision of non-zero quantized coefficient will be described.

This is a method to reduce the quantization scale and refine non-zero quantized coefficient without increasing of runlength of zero quantized coefficient.

Additionally, a quantization refinement scheme using a fixed reduced part to the quantization scale in order to make realization of such refinement scheme easy will be proposed. It is called as a single-step quantization refinement scheme in this application.

(2) Whole structure of encoding and decoding system

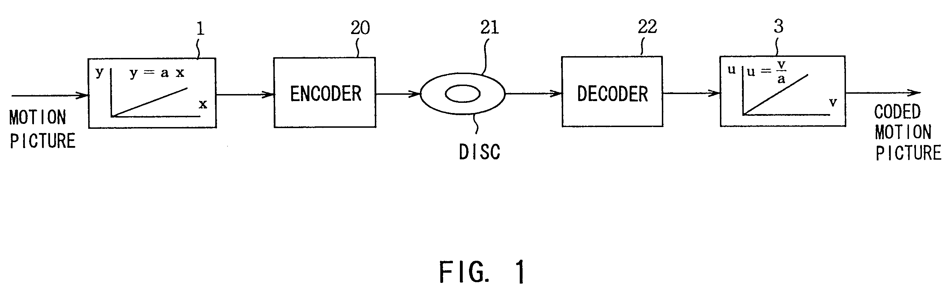

An outline of the encoding and decoding system of dynamic range compression/extension scheme for lessening the difficulty of source motion picture sequence by reduction of its dynamic range will be described with reference to Fig. 1.

First, in encoding, a dynamic range compression circuit 1 sequentially and linearly compresses dynamic range of each pixel in the source motion picture sequences. In this process, the dynamic range is compressed on the basis of the following equation:

$$y = ax \qquad (1)$$

wherein, "x" is the pixel value of the source picture, "y" is the pixel value to be coded, and "a" is a constant (wherein a < 1). Next, an encoder circuit 20 codes the data by performing DCT, quantization, and variable length coding. The data having compressed dynamic range is coded so as to lessen the bit number comparing to the case where the source picture is just coded, and it has become possible to assign a surplus bit corresponding to the reduced bit number. Thus, the quantized coefficient can be refined more.

The coded data output from the encoder circuit 20 is recorded in a disc 21 via a recording circuit which is not shown. The coded data recorded in the disc 21 is read out via a reproduction circuit which is not shown to output to a decoder circuit 22. Television broadcasting or communication network can be used as a transmission line to transmit the coded data instead of the disc 21.

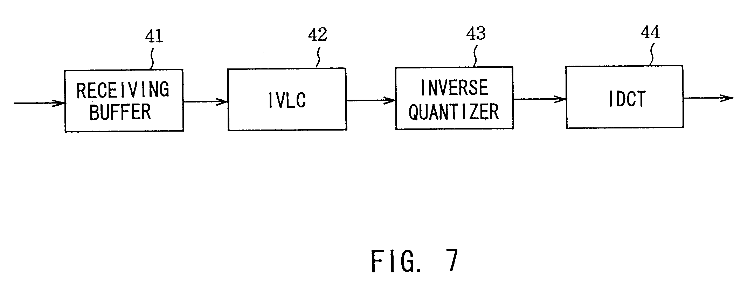

A decoder circuit 22 is constructed as shown in Fig. 7. The coded data read from the disc 21 via the reproduction circuit is stored once in a receiving buffer 41. The coded data read from the receiving buffer is variable-length-decoded by a variable length decoder circuit 42. At this time, the quantization scale used in coding is also decoded. An inverse quantizer 43 inverse-quantizes the quantized DCT coefficient based on the decoded quantization scale and supplies it to an inverse DCT circuit 44. The inverse DCT circuit 44 performs inverse DCT on the inverse-quantized DCT coefficient and outputs the decoded picture. In practice, the decoder circuit 22 includes the construction such as a predictor to correspond to the coded data which is predictively encoded, but the description is omitted for simplification.

The decoder circuit 22 decodes the coded data as the above method and gives it to a dynamic range extension circuit 3. The dynamic range extension circuit 3 restores by extending the dynamic ranges of each pixel to their original lengths. Then, the dynamic range extension circuit 3 extends the picture data on the basis of the following equation:

$$u = v/a \qquad (2)$$

wherein, "u" is the pixel value of the decoded picture, "v" is an image value viewing and "a" is a constant (wherein a < 1).

## (3) Quantization refinement scheme

A quantization refinement scheme to be introduced so as to improve a precision of the non-zero quantized DCT coefficient will be described. First, a multi-step quantization refinement scheme will be described and second a single-step quantization refinement scheme will be described.

## (3-1) Multi-step quantization refinement

## (3-1-1) Multi-step quantization refinement circuit

## (No.1)

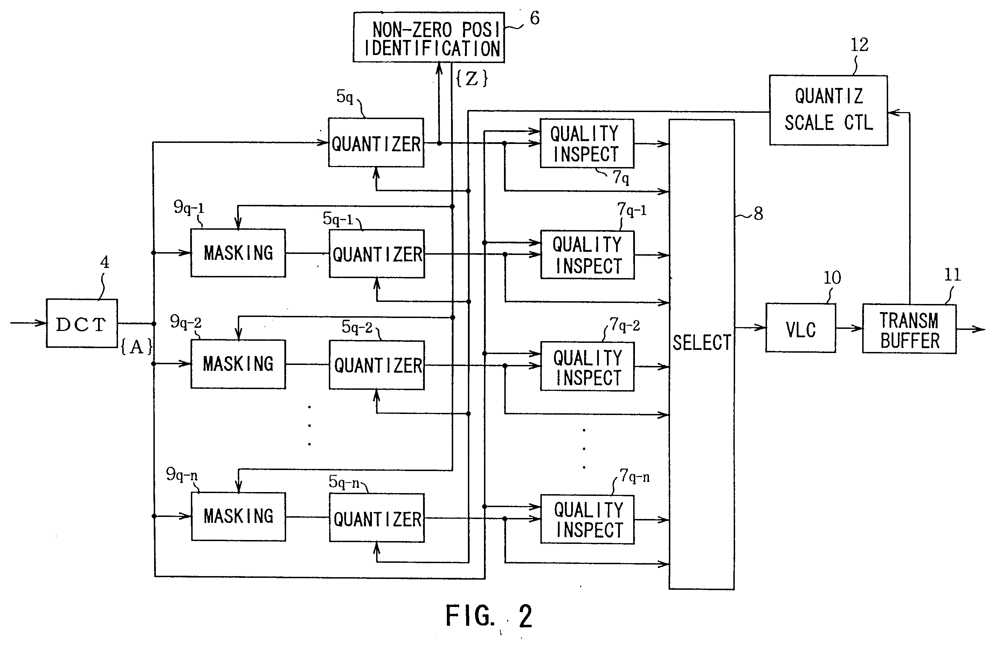

Fig. 2 shows a multi-step quantization refinement circuit included in the encoder circuit 20. The multi-step quantization refinement circuit is structured by a discrete cosine transform (DCT) circuit 4 and quantization circuits, etc.. First, the DCT circuit 4 transforms the inputted data into a DCT coefficient and supplies it to the quantization circuit. The quantization circuit inputs DCT coefficient into a quantizer 5q out of quantizers 5q to 5q-n of a number of n+1, which quantizer 5q having the largest quantization scale, in order to quantize the DCT coefficient by a quantization scale q. The quantized DCT coefficient is given to a non-zero position identification circuit 6.

The quantization scale q at this time is set as follows. An VLC circuit 10 performs runlength coding to convert the inputted quantized DCT coefficient into the data represented by a pair of the length of zero value and the successive non-zero value, and performs variable length coding on the data by using the predetermined conversion table to produce the coded data for transmission, and outputs it to a transmission buffer 11. The transmission buffer 11 stores the coded data for transmission once, and outputs it at the predetermined timing. Therefore, the data which has already quantized, runlength coded, and variable-length coded, which corresponds to the block before the DCT coefficient to be quantized from now, is stored once in the transmission buffer 11. The quantization scale controller 12 monitors the stored amount of the data stored in the buffer 11, controls the quantization scale q of the quantizer 5q for the DCT coefficient to be quantized from now in order that the transmission buffer 11 does not overflow or underflow, and simultaneously, controls the quantization scale of each quantizer in response to the quantization scale q. The rate control mechanism described above is realized by such quantization scale control.

The non-zero position identification circuit 6 identifies the position of the quantized coefficient having a value other than zero value among the quantized DCT coefficients, and supplies the position information to masking circuits 9q-1, 9q-2, ... 9q-n of a number-n. Based on the position information supplied from the non-zero position identification circuit, these number-n masking circuits 9q-1, 9q-2, ... 9q-n supplies, to respective quantizers 5q-1, 5q-2, ... 5q-n, the DCT coefficients untouched regarding a set {Z} of non-zero value among a set {A} of DCT coefficients output from the DCT circuit 4, and the value changed to zero respectively regarding other DCT coefficients, that is, the DCT coefficients in which the quantized DCT coefficient changed to zero by the quantizer 5q. Hereinafter, changing the input value to zero is referred to as masking. The quantizers 5q-1, 5q-2, ... 5q-n of a number-n quantize again the input DCT coefficients by using the quantization scales q-1, q-2, ... q-n respectively. The DCT coefficients having zero value is zero in the quantized DCT coefficients after quantization, so that only the set {Z} of non-zero value is actually quantized again by the requantization, and the accuracy is improved.

The quantized DCT coefficients respectively quantized by the quantizers 5q-1, 5q-2, ... 5q-n are inputted into these corresponding inspection circuits 7q, 7q-1, 7q-2, ... 7q-n. The inspection circuits 7q, 7q-1, 7q-2, ... 7q-n inspect the quality of a refined quantized coefficient. The inspection includes monitoring of an increase of bit number necessary to the quantization refinement scheme and inspecting of the quality of the refined quantized DCT coefficient.

In the quality inspection of the refined quantized DCT coefficient, an inspection of gains of signal-to-noise ratio between the practical DCT coefficient (the DCT coefficient before quantization obtained from the DCT circuit 4) and the quantized DCT coefficient, an inspection of mean square error between the practical DCT coefficient and the quantized DCT coefficient, or an inspection of the deviation of the quantized DCT coefficient from the practical DCT coefficient is performed, and then the obtained inspection result is supplied to a selection circuit 8. Moreover, each inspection circuit has the same construction inside as the VLC 10, and performs tentative runlength coding and variable length coding on each quantized DCT coefficient to supply the information having the obtained code length to the selection circuit 8. The selection circuit 8 selects the quantized DCT coefficient corresponding to the quality requested and the quantization scale corresponding to the quantized DCT coefficient. Further, comparing the code length obtained from the quality inspection circuit 7q and the code length obtained from other each of inspection circuits, if the code length increase corresponding to the quantized DCT coefficient selected based on the requested quality exceeds the maximum permitted code length increase, the quantized DCT coefficient and its quantization scale is outputted, the quantized DCT coefficient corresponding to the quality close to the requested quality within the limit of the maximum permitted code length increase.

Further, in the selection circuit 8, the quantized DCT coefficient corresponding to the minimum quantization scale within the limit of the maximum permitted code length increase can be selected. In this case, since a feedback occurs in the setting of the quantization scale q in quantizing the following DCT coefficient by the rate control mechanism, the quantized DCT coefficient is selected in this embodiment on the basis of the quality not to become the surplus quality.

The VLC circuit performs runlength coding and variable length coding on the quantized DCT coefficient output from the selection circuit 8, and outputs the obtained coded code to the transmission buffer 11. Further, the VLC circuit also codes the quantization scale corresponding to the selected quantized DCT coefficient as a coded code. The transmission buffer 11 stores the coded code once and outputs the coded code at the predetermined timing.

In addition, in the above embodiment, the masking circuits are provided at the previous stage of the quantizers. However, the masking circuits can be provided behind the quantizers, and can mask the quantized DCT coefficients corresponding to the position where the quantized DCT coefficient changed to zero value by the quantizer 5q.

Further, in the above embodiment, the masking circuits are provided for respective quantizers. However, after the masking is performed in the single masking circuit, the DCT coefficient can be assigned to each quantizer.

Furthermore, in the above embodiment, the quality is inspected by comparing the practical DCT coefficient ad each quantized DCT coefficient. However, the quantized DCT coefficient by one quantization scale are compared with the quantized DCT coefficient by the quantization scale which is one stage smaller, and the quantized DCT coefficient at the time when the difference in the quality improvement was gone can be selected.

According to this embodiment, the scale of circuit becomes larger than a multi-step quantization refinement circuit 2 which will be described below, but processing speed is improved by the parallel processing of quantization.

(3-1-2) Multi-step quantization refinement circuit

(No.2)

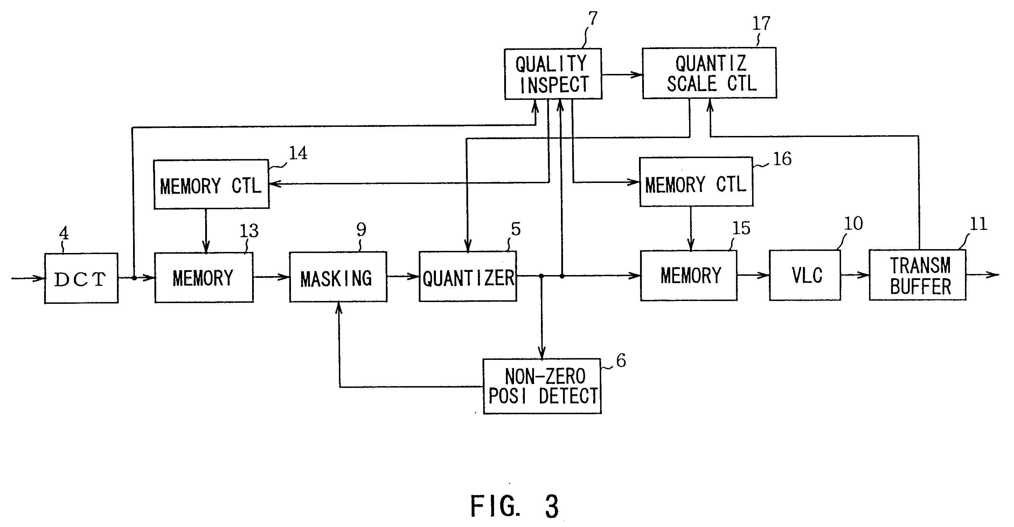

Next, a second embodiment for realizing a multi-step quantization refinement process will be described referring to Fig. 3, in which the portions having the same constitutions as Fig. 2 are designated with the same reference numerals. The detailed description is omitted.

In Fig. 3, a set {A} of DCT coefficients from a DCT circuit 4 is stored in a memory 13. A memory controller 14 controls writing and reading of the memory 13. The DCT coefficients read from the memory 13 are supplied to a masking circuit 9. The masking circuit 9 outputs the supplied DCT coefficients untouched when a quantizer 5 quantizes using the initial quantization scale q, and outputs zero when the quantizer 5 quantizes again after changing the other DCT coefficients other than a set {Z} of non-zero value detected by a non-zero position detecting circuit 6 into zero.

The quantization circuit 5 quantizes the DCT coefficients based on the quantization scale set by a quantization scale controller 17. The quantized DCT coefficients output from the quantizer 5 is superscribed and stored in a memory 15 successively, while the DCT coefficient in the same block is quantized repeatedly. A memory controller 16 controls writing and reading of the memory 15. The quantized DCT coefficients read from the memory 15 is output via the VLC 10 and the transmission buffer 11.

The inspection circuit 7 monitors the quality inspection of the quantized DCT coefficients and the code length increase due to quantization refinement, similar to the inspection circuits 7q, 7q-1, 7q-2, ... 7q-n in Fig. 2, and at the same time, requests the change of the quantization scale to the quantization scale controller 17 if necessary. Moreover, the inspection circuit 7 sends to the memory controller 14 the signal for requesting rereading of DCT coefficients from the memory 13, and requests reading of refined quantized DCT coefficients from the memory 15 to the memory controller 16.

The quantization scale controller 17 composed of the above rate control mechanism cooperating with the transmission buffer 11 similar to the quantization scale controller 12 in Fig. 2, and sets the initial quantization scale q. Further, the quantization scale controller 17 sets successively a plurality of different quantization scales in response to the request of changing the quantization scale from the inspection circuit 7.

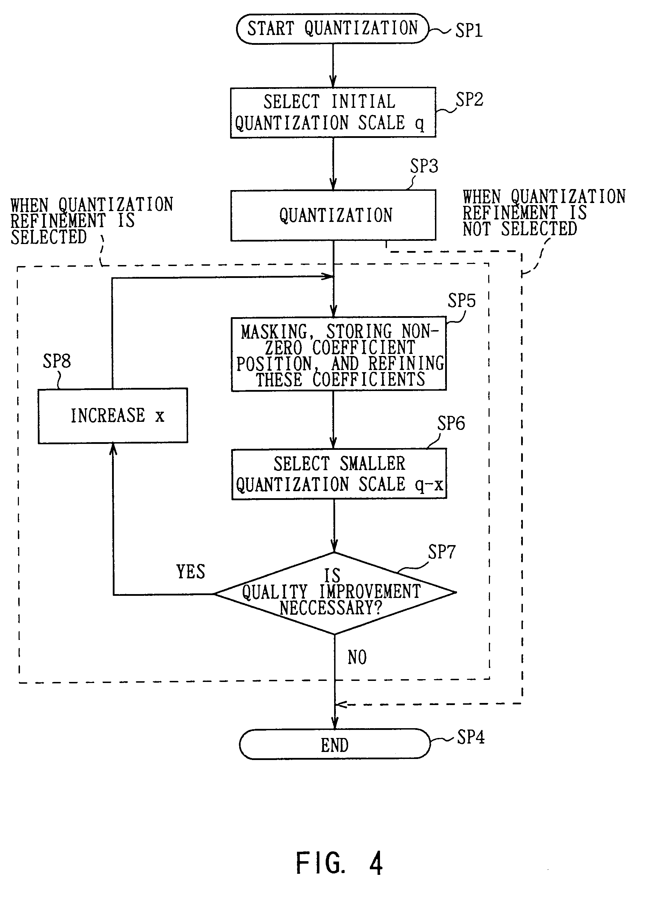

Fig. 4 shows the multi-step quantization refinement procedure in an encoder circuit 20 using the multi-step quantization refinement circuit (No.2). Here, the process in the portion surrounded by a broken line in the figure (step SP5 to step SP8) is the specific process in the multi-step quantization refinement scheme.

First, when the quantization process starts (step SP1), the initial quantization scale q is produced by the rate control mechanism (step SP2), and the DCT coefficient read from the memory 13 is supplied to the quantizer 5. The quantizer 5 successively quantizes the DCT coefficient by using the initial quantization scale q (step SP3).

When a quantization refinement process is not selected or the conventional quantization process is employed, it directly proceeds to step SP4, and the quantized DCT coefficient and the produced quantization scale are coded at the VLC circuit 10 as the coded data for transmission.

On the contrary, when a quantization refinement process is selected, the non-zero position identification circuit 6 identifies the positions of the sets of non-zero quantized DCT coefficient and memorizes the positions, and a refinement process of the quantized DCT coefficients placed at these positions starts (step SP5).

In step SP6, the same DCT coefficient as the DCT coefficient quantized at step SP3 is reread from the memory 13, and the masking circuit 9 performs masking on the DCT coefficient at zero position by using the position information stored in the non-zero position identification circuit 6. The quantizer 5 requantizes the DCT coefficient at the position identified as non-zero value by using the quantization scale q-1 which is one stage lower. AT next step SP7, the quality of the quantized DCT coefficient refined by the quantizer 5 and the increase of the code length are inspected by the inspection circuit 7, so as to judge whether or not the improvement is needed.

If an affirmative result is obtained in step SP7 (or in case that quality improvement of the refined quantized DCT coefficient is necessary), it proceeds to step SP8 to increase a value of parameter x and returns to the step SP5. Consequently, the value of parameter x increases from "1" to "2".

Again, the DCT coefficient at a position of the quantized DCT coefficient of non-zero is quantized by a quantization scale q-2 of low by one step in order to inspect the quality of quantized DCT coefficient. Hereinafter, if necessary, quantization by the quantization scales q-3, q-4, ... q-n of small by one step are repeated.

It is apparent that the process of steps SP5 to SP8 is repeated until a negative result is obtained in the step SP7 or a necessity to improve the quality of the refined quantized DCT coefficient disappears.

If a negative result is obtained at step SP7, the quality inspection circuit 7 sends to the memory controller 16 the instruction to read the refined DCT coefficient from the memory 15, the latest quantized DCT coefficient is read from the memory 15, and a series of the multi-step quantization refinement process terminates. The inspection at step SP7 includes monitoring of the increase of the bit number necessary to refinement of quantization and inspecting of the quality of the refined quantized DCT coefficient as described above. Further, the foundation of the inspection of the refined quantized DCT coefficient are gains of signal-to-noise ratio between the practical DCT coefficient and the refined quantized DCT coefficient, mean square error between the practical DCT coefficient and the refined quantized DCT coefficient, or the deviation of the refined quantized DCT coefficient for the practical DCT coefficient.

In addition, in the above embodiment, the masking circuit is provided in the previous stage of the quantizer. However, the masking circuit can be provided behind the quantizer, and in quantization using the initial quantization scale q, the quantized DCT coefficient corresponding to the position of zero can be changed into zero value.

Further, in the above embodiment, the practical DCT coefficient is compared with each quantized DCT coefficient to inspect the quality. However, the quantized DCT coefficient by one quantization scale can be compared with the quantized DCT coefficient by the quantization scale one stage lower successively, to select the quantized DCT coefficient at the time when there is no difference in the improvement of quality.

According to this embodiment, the processing time becomes longer than the multi-step quantization refinement circuit (No.1) described above because of necessity of the repeating action, but the circuit scale can be minimized.

As described above, according to such quantization refinement scheme, a position at which the DCT coefficient is zero is masked, and only the DCT coefficient at a position of non-zero DCT coefficient is requantized by means of these smaller quantization scales q-1, q-2, ... q-n. Consequently, the length of series of zero coefficients is not effected if it is quantized by the smaller quantization scale. The masking of the quantized coefficient at a zero position is important. Otherwise, there is a possibility that some leading zero coefficient becomes non-zero one due to reduction of the quantization scale. That is, it is possible to improve a precision of the non-zero coefficient without effect of the length of series of zero coefficients.

Here, when the precision of the remaining non-zero quantized coefficient is improved, the bit number necessary to express these non-zero coefficients correspondingly increases. As a result, it is necessary to monitor the refined quantized DCT coefficient and control the code length increase so as to become under the value of maximum permitted code length. Thus, it is possible to select the quantization scale giving the best picture quality without extremely large amount of code to be allocated to one block, and code the non-zero quantized DCT coefficient at much higher precision.

With the above structure, it is possible to attain a coding of high quantization precision and good picture quality by compressing the difficulty of the image data through a linear mapping, transforming the compressed data through a discrete cosine transform, and requantizing the DCT coefficient having non-zero value of a quantized DCT coefficient by means of quantization scales q-1, q-2, ... q-n smaller than an initial quantization scale q when the coefficient data is quantized by the initial quantization scale q.

Additionally, in quantization by these smaller quantization scales q-1, q-2, ... q-n, it is possible to more improve the precision of non-zero coefficient by omitting, that is, masking the quantized DCT coefficient being zero in a quantization by the quantization scale q, without effect on the length of the series of zero coefficients. As a result, it is possible to realize a coding operation in which mosquito noise and block noise are difficult to generate.

Further, in quantization by these small quantization scales q-1, q-2, ... q-n, it is also possible to improve a picture quality without increasing the data volume by using the inspection circuits 7q-1, 7q-2, ... 7q-n and the best refinement coefficient selection circuit 8 to calculate the code length and signal-to-noise ratio, and select the quantization scale giving the best picture quality.

(3-2) Single-step quantization refinement

(3-2-1) Single-step quantization refinement circuit

Continually, a single-step quantization refinement circuit obtained by simplifying the circuit structure in order to make the multi-step quantization refinement circuit easy to attain will be described.

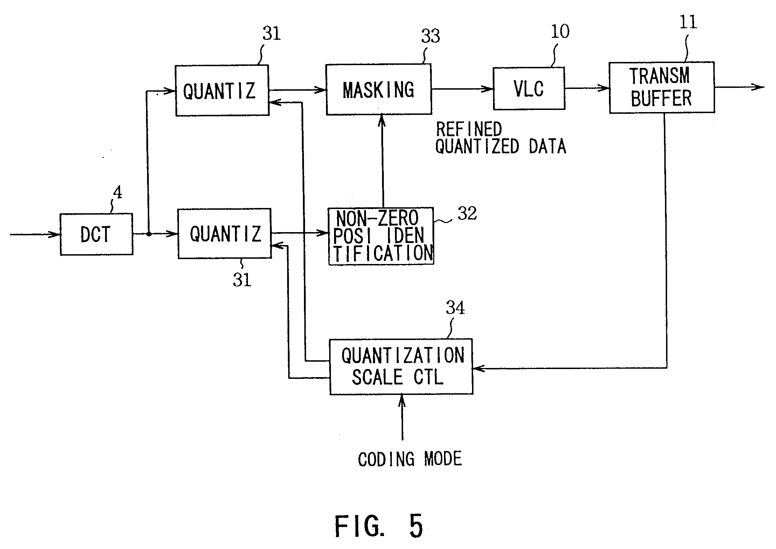

Fig. 5 shows a single-step quantization refinement circuit included in the encoder circuit 20. The single-step quantization refinement circuit is structured by a discrete cosine transform (DCT) circuit 4 and a quantization circuit, etc..

The single-step quantization refinement circuit uses two quantization scales of an initial quantization scale q for omitting repeating operation of DCT coefficient refinement process and one quantization scale q-c having a small step quantization scale.

In this case, first a data set {A} transformed into the DCT coefficient is given to a quantizer 31q and it is quantized with the initial quantization scale q given from a quantization scale controller 34. The initial quantization scale q is set by the rate control mechanism similar to the case of the multi-step quantization refinement.

Continuously, a position in which a coefficient value is non-zero among the quantized DCT coefficients is identified by a non-zero position identification circuit 32 and it is given to a masking circuit 33. Thus, only the set {Z} of DCT coefficients having non-zero quantized value in the quantized DCT coefficients {A} which is quantized by a quantizer 31q-c ({A} ∋ {Z}) is quantized with the practically smaller quantization scale q-c, and is outputted. The symbol "c" is a constant giving a fixed decrement larger than "0" and smaller than "q". "c" is set to "c1" in intra mode, and is set to "c2" in inter mode, respectively.

(3-2-2) Single-step quantization refinement process

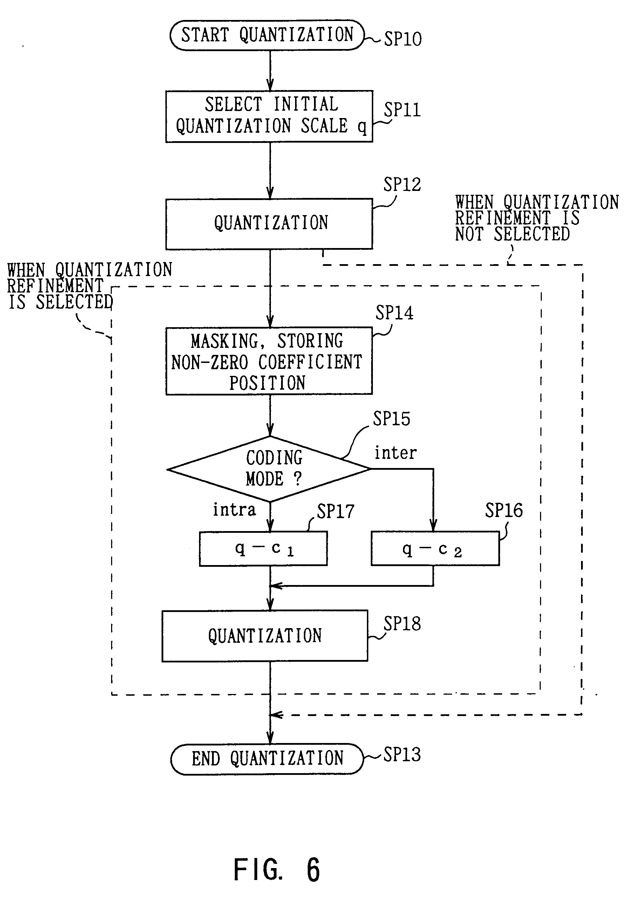

Next, the procedure of single-step quantization refinement process in the encoder circuit 20 is shown in Fig. 6. A part encircled by broken lines in the drawing is a process particular to the single-step quantization refinement process.

First, when the quantization process starts (step SP10), an initial quantization scale q is produced from the rate control mechanism (step SP11), and the initial quantization scale q is supplied to the quantizer 31q. The quantizer 31q uses the initial quantization scale q and sequentially quantizes DCT coefficients (step SP12).

When a quantization refinement process is not selected (that is, when the conventional quantization process is employed), the process proceeds from the step SP12 to the step SP13, and the quantized DCT coefficient and the produced quantization scale are coded as the coded data for transmission at the VLC circuit 10.

On the contrary, when the quantization refinement process is selected, a position of sets of non-zero quantized DCT coefficients is identified and memorized.

In the next step SP15, a coding mode is judged whether it is inter mode or intra mode, and a quantization scale controller 34 sets the fixed decrement value "c" of the quantization scale of the quantizer 31q-c to one suitable value to respective modes. In this connection, intra coding mode is applied to a block coded by using only DCT and quantization and inter coding mode is applied to a block coded by using both the motion compression and DCT and quantization.

In MPEG1 and MPEG2 described above, the coding using I-picture, P-picture, and B-picture is well known. All macro block in I-picture is intra-coded. P-picture includes both of the macro block generally intra coded, and the macro block forward predicted. B-picture includes the macro block generally intra coded, the macro block forward predicted, the macro block backward predicted, and the macro block bidirectional predicted.

The intra mode corresponds to the macro block intra coded in I-picture, P-picture, and B-picture, and the inter mode corresponds to the other macro block.

For example, when the coding mode is inter mode, a quantization scale q-c2 is selected at the step SP16, then the non-zero quantized DCT coefficient is more refined by the quantization scale q-c2 (step SP18).

On the contrary, when the coding mode is intra mode, a quantization scale q-c1, is selected in the step SP17, then the non-zero quantized DCT coefficient is further refined by the quantization scale q-c1 (step SP18).

As described above, because that the single-stage quantization refinement scheme is carried out without repeating operations of DCT coefficient refinement, so that its structure is simple and it is possible to shorten process time.

In addition, in the above embodiment, the masking circuit is provided behind the quantizer. However, the masking circuit can be provided at the previous stage of the quantizer, and the quantized DCT coefficient corresponding to the position of zero can be changed into zero when the initial quantization scale q is used to quantize.

According to the above structure, difficulty of the image data is compressed by linear mapping, then it is discrete-cosine-transformed. Furthermore, in a quantization of the coefficient data by the initial quantization scale q, DCT coefficient having a quantization coefficient of non-zero value is quantized again by a fixed quantization scale q-c smaller than an initial quantization scale q, so that it is possible to realize a coding in high quantization precision and good picture quality. As a result, it is possible to more reduce mosquito noise and block noise comparing to that of the conventional one.

Also, a scale value of the fixed quantization scale q-c is set according to a coding mode, so it is possible to realize a coding suitable to respective modes.

(4) Other embodiments

In the above embodiment, linear mapping is used to reduce a dynamic range of pixel level of an image sequence. However, the present invention is not only limited to this, but may use non-linear mapping so as to reduce the dynamic range and may use a reverse mapping so as to restore the dynamic range attaining a more high ratio of compression.

Further, in the above embodiments, DCT coefficients of the image data transformed by a discrete cosine transform (DCT) are quantized and refined. However, the present is not only limited to this, but may be applied to the case that the coefficients of the image data transformed by other orthogonal transformation are refined and corrected resulting in an obtaining of the same effect as that of the embodiment above.

As described above, according to the present invention, dynamic ranges are compressed for each pixel and orthogonal transformed, and when the coefficient data obtained by the orthogonal transform is quantized by means of the first quantization scale, the coefficient data having the first quantization data value of non-zero is quantized by the second quantization scale smaller than the first quantization scale, so that the image signal encoding method and apparatus thereof enabling to improve the picture quality with a bit rate of the level similar to that of the conventional method and apparatus.

Industrial Applicability

An image signal encoding method and apparatus according to this invention can be utilized for a disc manufacturing apparatus for manufacturing a disc in which a bit stream of MPEG1 or MPEG2 is recorded, or a transmitting apparatus of CATV transmitting a bit stream of MPEG1 or MPEG2 or a digital satellite broadcasting.

Further, an image signal decoding method and apparatus according to this invention can be utilized for a disc reproducing apparatus for reproducing a disc in which a bit stream of MPEG1 or MPEG2 is recorded, or a receiving apparatus of CATV transmitting a bit stream of MPEG1 or MPEG2 or a digital satellite broadcasting.

Further, a picture recording medium according to this invention can be utilized as a recording medium in which a bit stream of MPEG1 or MPEG2 is recorded.

Description of Reference Numerals

1 ... dynamic range compression circuit, 3 ... dynamic range extension circuit, 4 ... discrete cosine transformation circuit, 5, 5q, 5q-1, 5q-2,... 5q-n, 31q, 31q-c ... quantizer, 6, 32 ... non-zero position identification circuit, 7, 7q, 7q-1, 7q-2,... 7q-n ... inspection circuit, 8 ... selection circuit, 9, 9q-1, 9q-2,... 9q-n, 33 ... masking circuit, 10 ... VLC circuit, 11 ... transmission buffer, 12, 17, 34 ... quantization scale controller, 13, 15 ... memory, 14, 16 ... memory controller, 20 ... encoder circuit, 21 ... disc, 22 ... decoder circuit, 41 ... receiving buffer, 42 ... variable length decoding circuit, 43 ... inverse quantizer, 44 ... inverse DCT circuit.

**Claims**

1. An image signal encoding method for encoding an image signal comprising the step of:
   compressing dynamic ranges of image signal for each pixel;
   orthogonal-transforming the image signal having compressed dynamic ranges for each block in order to transform it into coefficient data; and
   quantizing said coefficient data to produce a quantized data.

2. The image signal encoding method according to claim 1, wherein
   said step of quantization comprising the steps of:
   quantizing said coefficient data by a first quantization scale to produce a first quantization data; and
   quantizing only a coefficient data of said coefficient data of which said first quantization data is practically a non-zero value, by a second quantization scale smaller than said first quantization scale, to produce a second quantization data.

3. The image signal encoding method according to claim 2, wherein
   said step of generating a second quantization data, comprising the steps of:
   quantizing said coefficient data in parallel or repeatedly, by a plurality of quantization scale smaller than said first quantization scale, to produce a plurality of quantized data; and
   selecting one of said plurality of quantized data as said second quantized data.

4. The image signal encoding method according to claim 3, wherein
   said selection is based on at least one of the quality of said plurality of quantized data and the amount of increase of code length corresponding to said plurality of quantized data.

5. The image signal encoding method according to claim 2, wherein
said second quantization scale is set according to the coding mode.

6. A image signal encoding method for encoding an image signal, comprising the step of:
orthogonal-transforming the image signal for each block in order to transform it into coefficient data;
quantizing said coefficient data by a first quantization scale to produce a first quantized data; and
quantizing said coefficient data, concerning only a coefficient data which has said first quantized data being a non-zero value, by a second quantization scale smaller than said first quantization scale in order to produce a second quantized data.

7. The image signal encoding method according to claim 6, wherein
said step of generating a second quantization data, comprising the steps of:
quantizing said coefficient data in parallel or repeatedly, by a plurality of quantization scale smaller than said first quantization scale, to produce a plurality of quantized data; and
selecting one of said plurality of quantized data as said second quantized data.

8. The image signal encoding method according to claim 7, wherein
said selection is based on at least one of the quality of said plurality of quantized data and the amount of increase of code length corresponding to said plurality of quantized data.

9. The image signal encoding method according to claim 6, wherein
said second quantization scale is set according to the coding mode.

10. An image signal decoding method for compressing dynamic ranges of image signals for every pixel, for orthogonal-transforming image signal of which said dynamic range is compressed for each block to transform the image signal into coefficient data, and decoding the quantized data produced by quantizing said coefficient data, comprising the steps of:
inverse quantizing said quantized data to produce coefficient data;
inverse orthogonal transforming said coefficient data for each block to produce decoded picture; and
extending the dynamic range of said decoded image signal for each pixel.

11. An image signal encoding apparatus for encoding an image signal, comprising:
dynamic range compressing means for compressing dynamic ranges of image signal for each pixel;
orthogonal transforming means for orthogonal-transforming the image signal having compressed dynamic ranges for each block in order to transform it into coefficient data; and
quantization means for quantizing said coefficient data to produce a quantized data.

12. The image signal encoding apparatus according to claim 11, wherein
said quantization means comprising:
first quantization means for quantizing said coefficient data by a first quantization scale to produce a first quantization data; and
second quantization means for quantizing only a coefficient data of said coefficient data of which said first quantization data is practically a non-zero value, by a second quantization scale smaller than said first quantization scale, to produce a second quantization data.

13. The image signal encoding apparatus according to claim 12, wherein
said second quantization means comprising:
means for quantizing said coefficient data in parallel or repeatedly, by a plurality of quantization scale smaller than said first quantization scale, to produce a plurality of quantized data; and
selection means for selecting one of said plurality of quantized data as said second quantized data.

14. The image signal encoding apparatus according to claim 13, wherein:
said selection means includes inspection means for inspecting, at least, one of the quality of said plurality of quantized data; and
said selection means selects said second quantized data based on the inspected result of said inspection means.

15. The image signal encoding apparatus according to claim 12, wherein
said second quantization scale is set according to the coding mode.

16. An image signal encoding apparatus for encoding an image signal, comprising:
means for orthogonal-transforming the image signal for each block in order to transform it into coefficient data;
first quantization means for quantizing said coefficient data by a first quantization scale to produce a first quantized data; and
second quantization means for quantizing said coefficient data, concerning only a coefficient data which has said first quantized data being a non-zero value, by a second quantization scale smaller than said first quantization scale in order to produce a second quantized data.

17. The image signal encoding apparatus according to claim 16, wherein

said second quantization means comprising:

means for quantizing said coefficient data in parallel or repeatedly, by a plurality of quantization scale smaller than said first quantization scale, to produce a plurality of quantized data; and

selection means for selecting one of said plurality of quantized data as said second quantized data.

18. The image signal encoding apparatus according to claim 17, wherein:

said selection means includes inspection means for inspecting, at least, one of the quality of said plurality of quantized data; and

said selection means selects said second quantized data based on the inspected result of said inspection means.

19. The image signal encoding apparatus according to claim 16, wherein

said second quantization scale is set according to the coding mode.

20. A image signal decoding apparatus for compressing dynamic ranges of image signals for every pixel, orthogonal transforming image signal of which said dynamic range is compressed for each block to transform it into coefficient data, and decoding quantized data produced by quantizing said coefficient data, comprising:

inverse quantization means for inverse quantizing said quantized data to produce coefficient data;

inverse orthogonal transforming means for inverse orthogonal transforming said coefficient data for each block to produce decoded picture; and

dynamic range extending means for extending the dynamic range of said decoded image signal for each pixel.

21. A picture recording medium in which encoded picture data is recorded, wherein

the step for generating said encoded picture data comprising the steps of:

compressing dynamic range of image signal for each pixel;

orthogonal transforming said image signal of which dynamic range is compressed for each block and transforming it into coefficient data; and

quantizing said coefficient data to produce quantized data.

22. The image signal recording medium according to claim 21, wherein

said step of quantization comprising the steps of:

quantizing said coefficient data by a first quantization scale to produce a first quantization data; and

quantizing only a coefficient data of said coefficient data of which said first quantization data is practically a non-zero value, by a second quantization scale smaller than said first quantization scale, to produce a second quantization data.

23. The image signal recording medium according to claim 22, wherein

said step of generating a second quantization data, comprising the steps of:

quantizing said coefficient data in parallel or repeatedly, by a plurality of quantization scale smaller than said first quantization scale, to produce a plurality of quantized data; and

selecting one of said plurality of quantized data as said second quantized data.

24. The image signal recording medium according to claim 23, wherein

said selection is based on at least one of the quality of said plurality of quantized data and the amount of increase of code length corresponding to said plurality of quantized data.

25. The image signal recording medium according to claim 22, wherein

said second quantization scale is set according to the coding mode.

26. The image signal recording medium in which encoded picture data is recorded, wherein

the step for generating said encoded picture data comprising the steps of:

orthogonal transforming image signal for each block to transform it into coefficient data;

quantizing said coefficient data by a first quantization scale to produce a first quantization data; and

quantizing said coefficient data, concerning only a coefficient data which has said first quantized data being practically a non-zero value, by a second quantization scale smaller than said first quantization scale, to produce a second quantized data.

27. The image signal recording medium according to claim 26, wherein

said step of generating a second quantization data, comprising the steps of:

quantizing said coefficient data in parallel or repeatedly, by a plurality of quantization scale smaller than said first quantization scale, to produce a plurality of quantized data; and

selecting one of said plurality of quantized data as said second quantized data.

28. The image signal recording medium according to claim 27, wherein
said selection is based on at least one of the quality of said plurality of quantized data and the amount of increase of code length corresponding to said plurality of quantized data.

29. The image signal recording medium according to claim 26, wherein
said second quantization scale is set according to the coding mode.

EP 0 699 003 A1

MOTION
PICTURE

$y = a x$

ENCODER 20

DISC 21

DECODER 22

$u = \dfrac{v}{a}$

CODED
MOTION
PICTURE

FIG. 1

FIG. 2

EP 0 699 003 A1

EP 0 699 003 A1

FIG. 3

EP 0 699 003 A1

FIG. 4

16

EP 0 699 003 A1

FIG. 5

START QUANTIZATION — SP10

SELECT INITIAL QUANTIZATION SCALE q — SP11

QUANTIZATION — SP12

WHEN QUANTIZATION REFINEMENT IS NOT SELECTED

WHEN QUANTIZATION REFINEMENT IS SELECTED

MASKING, STORING NON-ZERO COEFFICIENT POSITION — SP14

CODING MODE? — SP15

inter

intra — SP17

$q - c_1$

$q - c_2$ — SP16

QUANTIZATION — SP18

END QUANTIZATION — SP13

FIG. 6

FIG. 7

RECEIVING BUFFER 41 → IVLC 42 → INVERSE QUANTIZER 43 → IDCT 44

INTERNATIONAL SEARCH REPORT

International application No.

PCT/JP95/00202

**A. CLASSIFICATION OF SUBJECT MATTER**

Int. Cl$^6$ H04N7/30

According to International Patent Classification (IPC) or to both national classification and IPC

**B. FIELDS SEARCHED**

Minimum documentation searched (classification system followed by classification symbols)

Int. Cl$^6$ H04N7/12-H04N7/68

Documentation searched other than minimum documentation to the extent that such documents are included in the fields searched

| | | |
|---|---|---|
| Jitsuyo Shinan Koho | 1926 | 1995 |
| Kokai Jitsuyo Shinan Koho | 1971 | 1995 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, A, 1-137785 (Sony Corp.),<br>May 30, 1989 (30. 05. 89)(Family: none)<br>Fig. 1<br>Figs. 1, 3 | 1, 11, 20<br>2-10,<br>12-19,<br>21-29 |
| Y | JP, A, 61-147692 (NEC Corp.),<br>July 5, 1986 (05. 07. 86)(Family: none) | 2-10,<br>12-19,<br>21-29 |
| Y | JP, A, 4-156794 (Matsushita Electric Ind. Co.,<br>Ltd.),<br>May 29, 1992 (29. 05. 92)(Family: none) | 2-10,<br>12-19,<br>21-29 |

☑ Further documents are listed in the continuation of Box C. ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| April 6, 1995 (06. 04. 95) | May 16, 1995 (16. 05. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)